# EUROPÄISCHE PATENTSCHRIFT

(11) **EP 3 019 384 B1**
(45) Veröffentlichungstag und Bekanntmachung des Hinweises auf die Patenterteilung: **08.05.2019**
(21) Anmeldenummer: 14729210.6
(22) Anmeldetag: 21.05.2014
(51) Int. Cl.: B62B 3/10, A47L 13/51

(54) **REINIGUNGSWAGEN**
CLEANING TROLLEY
CHARIOT DE MÉNAGE

(30) Priorität: 12.07.2013 DE 102013011632
(43) Veröffentlichungstag der Anmeldung: 18.05.2016
(73) Patentinhaber: Carl Freudenberg KG, 69469 Weinheim (DE)
(72) Erfinder: EISENHUT, Andreas, 82049 Pullach (DE); RÜCKHEIM, Markus, 64347 Griesheim (DE); GRATZKI, Torsten, 45219 Essen (DE); BARBER, Steve, Manchester M20 2TG (GB); DEERBERG, Jens, 45133 Essen (DE)
(86) Internationale Anmeldenummer: PCT/EP2014/001370
(87) Internationale Veröffentlichungsnummer: WO 2015/003761

(56) Entgegenhaltungen:
- WO-A2-2007/047214
- FR-A- 1 438 546
- GB-A- 2 388 577
- US-A1- 2002 195 782
- US-A1- 2007 267 832

## Beschreibung

### Technisches Gebiet

Die Erfindung betrifft einen Reinigungswagen gemäß dem Oberbegriff des Patentanspruchs 1.

### Stand der Technik

Aus dem Stand der Technik, wie aus der US 2007/0267832 A1, sind bereits derartige Reinigungswagen bekannt.

Die Patentschrift DE 10 2005 044 984 B3 offenbart einen Reinigungswagen, der einen Rahmen aus kombinierbaren und lösbar verbindbaren Elementen aufweist.

Der Rahmen bildet ausladende Aufstellflächen aus, auf welche Module wie beispielsweise Eimer aufgestellt werden können. Die laterale Ausdehnung der Aufstellflächen, nämlich die Ausdehnung in der Ebene, ist durch Gestänge begrenzt, zwischen denen Streben verlaufen.

Generell ist es so, dass die meisten Reinigungswagen mit einer Bodenplatte oder mit einer Bodenstruktur arbeiten, auf die bzw. in die Module positioniert werden können.

Wesentlich beim Stand der Technik ist, dass die Grenzlinie oder Grenzfläche des Reinigungswagens die darauf befindlichen Module zumindest im Bodenbereich der Module überragt.

In manchen Fällen kann der obere, breitere Teil konisch von unten nach oben sich öffnender Module partiell über die Grenzfläche bzw. Grenzlinie des Reinigungswagens hinaus ragen.

In jedem Fall ist aber der Bodenbereich der Module, z.B. ein Eimerboden, immer innerhalb der Grenzfläche bzw. Grenzlinie des Reinigungswagens.

Aus dem Stand der Technik ist es auch bekannt, dass ein Modul nicht auf einer Grundplatte steht, sondern zwischen Querstreben eingehängt ist. Die Grenzfläche bzw. Grenzlinie des Reinigungswagens ist meist durch vier Räder vorgegeben, also mindestens so groß wie das Rechteck, das durch die Räder aufgespannt wird.

WO 2007/047214 A2 zeigt einen Reinigungswagen mit einem Grundkörper, der mehrere an den Grundkörper ankoppelbare Module trägt.

FR 1 438 546 zeigt einen aus einem Gestell ausgebildeten Reinigungswagen, wobei Module in den Reinigungswagen eingehängt werden können.

US 2007/0267832 A1 zeigt einen Reinigungswagen, bei welchem der Bodenbereich eines Moduls auf einer Seite über die Grenzfläche des Grundkörpers hinausragt. Ein weiteres Modul ist in einer Ausbuchtung des Grundkörpers aufgenommen.

US 2002/0195782 zeigt einen Reinigungswagen, bei welchem ein Modul in den Reinigungswagen eingeschoben werden kann.

GB 2 388 577 A zeigt einen Reinigungswagen mit einem Grundkörper, welcher zwei an den Grundkörper ankoppelbare Module trägt.

Die Aufstellflächen der Reinigungswagen des Stands der Technik sind als Plattformen relativ ausladend und müssen an die Größe der Module bzw. Eimer angepasst werden. Hierdurch ist die Kompaktheit eines Reinigungswagens durch die Dimensionen der zu befördernden Module bestimmt.

### Darstellung der Erfindung

Der Erfindung liegt daher die Aufgabe zugrunde, einen Reinigungswagen der eingangs genannten Art derart auszugestalten und weiter zu bilden, dass dieser bei sehr kompaktem und platzsparendem Aufbau eine Vielzahl unterschiedlich großer Module kippstabil tragen kann.

Die vorliegende Erfindung löst die zuvor genannte Aufgabe durch die Merkmale des Patentanspruchs 1.

Ein erfindungsgemäßer Reinigungswagen umfasst einen Grundkörper, wobei die laterale Ausdehnung des Grundkörpers, nämlich die Ausdehnung in der Ebene, durch eine äußere umfängliche Grenzfläche oder Grenzlinie begrenzt ist und wobei der Grundkörper mindestens ein an den Grundkörper ankoppelbares Modul trägt. Erfindungsgemäß ist vorgesehen, dass das Modul dem Grundkörper derart formschlüssig, reibschlüssig und/ oder kraftschlüssig kippstabil zugeordnet ist, dass der Bodenbereich des Moduls zumindest auf einer Seite über die Grenzfläche oder Grenzlinie des Grundkörpers hinausragt.

Erfindungsgemäß ist der Grundkörper als gerüstartiges Element mit vier Hauptstegen und mindestens einer Sattelstrebe ausgebildet, wobei sich die Sattelstrebe unter Ausbildung mindestens einer Ausnehmung zwischen zwei Hauptstegen erstreckt. Auf die Sattelstrebe kann das Modul aufgesetzt werden.

Erfindungsgemäß ist erkannt worden, dass durch einen Formschluss, Reibschluss und/ oder Kraftschluss eine Art Klemmwirkung erzielt werden kann, welche ein relativ großes Modul am Grundkörper fixiert. Obwohl ein ausladendes Modul den Grundkörper überlappt bzw. seitlich überragt und nicht vollständig innerhalb einer von dessen Grenzlinie aufgespannten Fläche liegt, kann das Modul sicher getragen und transportiert werden. Insoweit ist ein Reinigungswagen der eingangs genannten Art derart ausgestaltet und weitergebildet, dass dieser bei sehr kompaktem und platzsparendem Aufbau eine Vielzahl unterschiedlich großer Module tragen kann.

Unter Grenzfläche oder Grenzlinie im Sinne dieser Beschreibung wird die maximale Ausdehnung des Grundkörpers in der Ebene verstanden.

In dem Grundkörper ist mindestens eine Ausnehmung ausgebildet, in welche das Modul eingesetzt ist. Das Modul kann durch eine Steckverbindung mit dem Grundkörper verbunden werden.

Das Modul greift mit einem Teil seines Körpers in die Ausnehmung ein, wobei ein anderer Teil über die Grenzfläche oder Grenzlinie hinausragt. Durch diese Maßnahme können mehrere Module, die aneinander gereiht eine größere Fläche bedecken würden als der Grundkörper, im Grundkörper fixiert werden.

Dabei weist der Grundkörper erfindungsgemäß mindestens eine Sattelstrebe auf, auf welche das Modul aufgesetzt ist, wobei das Modul die Sattelstrebe mit zwei Schenkelelementen U-förmig umgreift. Das Modul ist gegen Verkippen gesichert, da dessen Schenkelelemente beidseitig an der Sattelstrebe, vorzugsweise flächig, anliegen. Ein Schenkelelement könnte des Weiteren mit einer Seite noch an einem inneren Hauptsteg anliegen, um einen Formschluss zu realisieren.

Der Grundkörper könnte mindestens einem Modul in vertikaler Richtung eine Abstützung bieten, wobei die Kippstabilität des Moduls durch einen überwiegend vertikalen Formschluss zischen Grundkörper und Modul gegeben ist. Es können auch mehrere Module Abstützung finden und durch Formschluss kippstabil gehalten sein.

Im Grundkörper oder in einer Platte könnten Löcher oder Bohrungen ausgebildet sein, in welche Stifte oder Dome des Moduls einfügbar sind. Die Stifte oder Dome sind bevorzugt am Bodenbereich des Moduls angeordnet.

Im Grundkörper könnten mindestens zwei Module aufgenommen sein, wobei sich ein erstes Modul gegen ein zweites Modul gegen Verkippen um eine überwiegend horizontale Achse abstützt. Hierdurch kann ein mehrfacher Formschluss realisiert werden, nämlich einerseits an der Sattelstrebe und/ oder einem inneren Hauptsteg und andererseits durch Anlage an einem anderen Modul. Durch diese Ausgestaltung kann ein Modul auch nur mit einem Schenkelelement an einer Sattelstrebe anliegen, wobei das Modul mit einem weiteren Teil seines Körpers an einem weiteren Modul abgestützt anliegt.

Vor diesem Hintergrund könnten im Grundkörper mindestens zwei Module aufgenommen sein, wobei die Module derart komplementär zueinander ausgebildet sind, dass sie unter Ausbildung eines Formschlusses aneinander anliegen. Es ist konkret denkbar, dass ein erstes Modul einen teilweise konvex oder konkav gekrümmten Rand aufweist, welcher an einer komplementär hierzu konkav oder konvex gekrümmten Wand eines zweiten Moduls anliegt. Hierdurch wird ein Tropfschutz zwischen den Modulen realisiert. Konkret wird verhindert, dass Flüssigkeit beim Entnehmen aus einem Modul zwischen den Modulen herabrinnt und unter dem Reinigungswagen gefährliche Pfützen bildet.

Vor diesem Hintergrund ist denkbar, dass die Module auch um 180° gedreht in den Grundkörper einfügbar sind und dennoch formschlüssig aneinander liegen können. Eine Drehung um 180° um eine vertikale z-Achse kann notwendig sein, wenn die Module unterschiedliche Funktionsbereiche auf gegenüberliegenden vertikalen Seiten aufweisen. Einem Modul, z.B. einem Eimer oder einem Aufbewahrungsbehälter, können zwei Bereiche, nämlich vorne und hinten, zugeordnet werden, die unterschiedliche Funktionalitäten aufweisen.

So kann bei einem Eimer beispielsweise die Vorderseite als Ausguß gestaltet sein, während die Rückseite der Aufnahme einer Wischbezug-Presse dient. Bei einem Aufbewahrungsbehälter kann der vordere Teil dem Öffnen und der Entnahme der darin befindlichen Reinigungsutensilien zugewiesen sein, während der hintere Teil der Aufnahme eines Deckels dient.

Je nach Reinigungsanwendung kann es notwendig sein, dass der eine oder andere Funktionsbereich, beispielsweise nach außen gerichtet, dem Benutzer zugewendet werden kann. Dies kann aus ergonomischen Gründen der Fall sein.

Mindestens ein Modul könnte als Transportbehälter ausgestaltet sein. Transportbehälter erlauben die unmittelbare und verliersichere Aufnahme von Flüssigkeiten oder Gegenständen.

Mindestens ein Modul könnte als Transportbehälter mit nach oben gerichteter Öffnung ausgestaltet sein. So kann Reinigungsflüssigkeit problemlos transportiert werden. Der Transportbehälter kann als Eimer oder Mopbox ausgestaltet sein.

Der Transportbehälter könnte konisch ausgebildet sein, sich nämlich zu seiner Öffnung hin im Umfang aufweiten. Hierdurch wird ein Tropfschutz gewährleistet, wenn nämlich ein aufgeweiteter oberer Rand eines Moduls einen tiefer liegenden Rand eines weiteren Moduls überragt.

Unter einer Sattelstrebe im Rahmen dieser Beschreibung wird auch eine Sattelstrebe verstanden, die nicht durchgehend ist. Des Weiteren muss sie nicht unbedingt eine nach unten offene Öffnung formen. Es kann sich auch nur um eine Vertiefung im Sinne einer Tasche handeln, die den Formschluss an den vorwiegend vertikalen Innenwandungen der Öffnung ermöglicht. Die Sattelstrebe kann auch durch zwei von der Seite zur Reinigungswagenmitte herein ragende Strebenstummel gebildet werden. Die Sattelstrebe kann auch erhaben, nach oben sich erstreckend ausgebildet sein.

An einer Innenwandung der Öffnung kann ein Rastmittel in Form einer Rastnase angeordnet sein, welche das Modul mit seiner Außenseite in der Öffnung verrastet.

Die Sattelstrebe könnte als Griff ausgebildet sein und sich dadurch von den Hauptstegen unterscheiden. Die als Griff ausgebildete Sattelstrebe könnte dünner als die Hauptstege ausgebildet sein. Denkbar ist auch, dass die Sattelstrebe mit einer Riffelung versehen ist.

Es ist auch denkbar, dass ein Kopplungselement verwendet wird, um zwei Reinigungswagen der hier beschriebenen Art aneinander zu koppeln. Vorzugsweise erfolgt die Kopplung über die Sattelstrebe. Das Kopplungselement kann zwei Sattelstreben zweier Reinigungswagen ergreifen.

### Kurzbeschreibung der Zeichnung

In der Zeichnung zeigen
- Fig. 1: vier Ansichten eines Reinigungswagens, umfassend einen Grundkörper, auf dem zwei Module angeordnet sind, und
- Fig. 2: in der oberen Hälfte drei Ansichten des Grundkörpers und der Module, wobei diese getrennt voneinander dargestellt sind, und in der unteren Hälfte eine Draufsicht auf den Grundkörper ohne Module.

### Ausführung der Erfindung

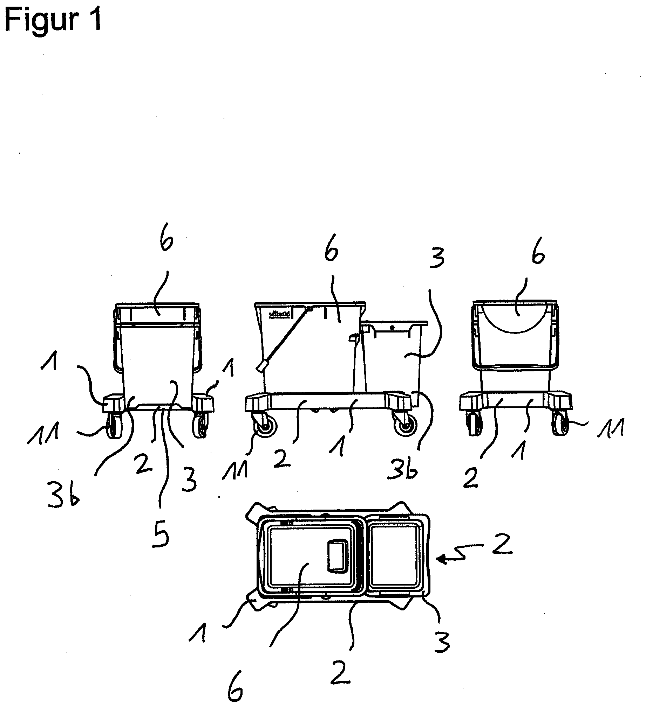

Fig. 1 zeigt in vier Ansichten, nämlich in drei Seitenansichten und einer Draufsicht, einen Reinigungswagen, umfassend einen Grundkörper 1, wobei die laterale Ausdehnung des Grundkörpers 1 durch eine äußere umfängliche Grenzfläche 2 oder Grenzlinie begrenzt ist und wobei der Grundkörper 1 mindestens ein an den Grundkörper 1 ankoppelbares Modul 3 trägt.

Das Modul 3 ist dem Grundkörper 1 derart formschlüssig, reibschlüssig und/ oder kraftschlüssig kippstabil zugeordnet, dass der Bodenbereich des Moduls 3 zumindest auf einer Seite über die Grenzfläche 2 oder Grenzlinie des Grundkörpers 1 hinausragt. Es kommt daher zu einer seitlichen Überlappung des Moduls 3. Dieses ragt über den Grundkörper 1 hinaus.

Der Grundkörper 1 bietet mindestens einem Modul 3 in vertikaler Richtung eine Abstützung, wobei die Kippstabilität des Moduls 3 durch einen vertikalen Formschluss zwischen Grundkörper 1 und Modul 3 gegeben ist.

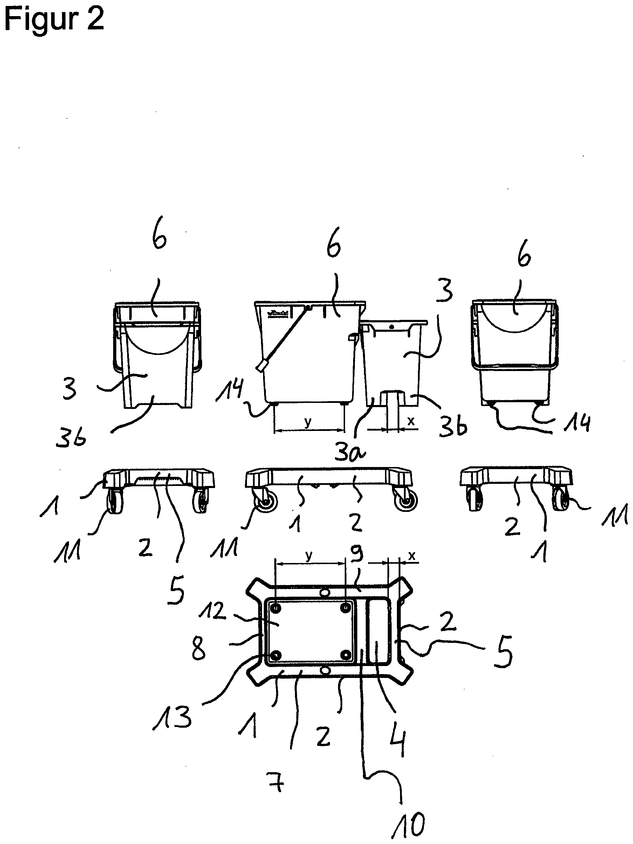

In der unteren Hälfte der Fig. 2 ist gezeigt, dass im Grundkörper 1 mindestens eine Ausnehmung 4 ausgebildet ist, in welche das Modul 3 eingesetzt ist.

Das Modul 3 greift mit einem Teil 3a seines Körpers in die Ausnehmung 4 ein, wobei ein anderer Teil 3b über die Grenzfläche 2 oder Grenzlinie hinausragt. Dies ist in den mittleren Ansichten der oberen Hälften der Fig. 1 und 2 dargestellt.

Die untere Hälfte der Fig. 2 zeigt, dass der Grundkörper 1 mindestens eine Sattelstrebe 5 aufweist, auf welche das Modul 3 aufgesetzt ist. Das Modul 3 umgreift die Sattelstrebe 5 mit zwei Schenkelelementen 3a, 3b u-förmig.

Ein Schenkelelement 3a liegt mit einer Seite an der Sattelstrebe 5 und mit der anderen Seite an einem inneren Hauptsteg 10 an, wie er in der unteren Hälfte der Fig. 2 dargestellt ist. Hierdurch ergibt sich ein Formschluss.

Im Grundkörper 1 sind mindestens zwei Module 3, 6 aufgenommen, wobei sich ein erstes Modul 3 gegen ein zweites Modul 6 gegen Verkippen abstützt. Die Module 3, 6 sind hierbei komplementär zueinander ausgebildet. Der Rand des ersten Moduls 3 liegt passgenau an der Wand des zweiten Moduls 6 an. Auch hierdurch ergibt sich ein Formschluss.

Im Grundkörper 1 sind mindestens zwei Module 3, 6 aufgenommen, wobei die Module 3, 6 derart komplementär zueinander ausgebildet sind, dass sie unter Ausbildung eines Formschlusses aneinander anliegen. Dies ist in der mittleren Ansicht der oberen Hälfte der Fig. 1 dargestellt.

Mindestens ein Modul 3, 6 ist als Transportbehälter mit nach oben gerichteter Öffnung, nämlich als eimerartiges Behältnis, ausgestaltet.

Die Transportbehälter sind konisch ausgebildet, weiten sich nämlich zu ihrer Öffnung hin im Umfang auf. Das zweite Modul 6 überragt das erste Modul 3, wobei der Rand des zweiten Moduls 6 den Rand des ersten Moduls 3 teilweise überdeckt. Hierdurch wird ein Tropfschutz realisiert. Dies ist in der mittleren Ansicht der oberen Hälfte der Fig. 1 dargestellt.

Der Grundkörper 1 ist als gerüst- und plattenartiges Element mit vier Hauptstegen 7, 8, 9, 10 und mindestens einer Sattelstrebe 5 ausgebildet, wobei sich die Sattelstrebe 5 unter Ausbildung mindestens einer Ausnehmung 4 zwischen zwei Hauptstegen 7, 9 erstreckt.

In der unteren Hälfte der Fig. 2 ist gezeigt, dass im Grundkörper 1 eine Ausnehmung 4 ausgebildet ist. Neben der Ausnehmung 4, durch den inneren Hauptsteg 10 abgetrennt, ist eine Platte 12 vorgesehen, in welcher Löcher oder Bohrungen 13 ausgebildet sind. In den Löchern oder Bohrungen 13 ist das zweite Modul 6 formschlüssig aufgenommen. Das zweite Modul 6 weist hierzu an seinem Bodenbereich Dome 14 auf, welche in die Löcher oder Bohrungen 13 einsteckbar sind.

Die Sattelstrebe 5 ist als Griff ausgebildet und unterscheidet sich dadurch von den Hauptstegen 7, 8, 9, 10. Die Sattelstrebe 5 ist dünner als die Hauptstege 7, 8, 9, 10 ausgebildet und weist eine Riffelung auf. Dem Grundkörper 1 sind Räder 11 zugeordnet.

## Patentansprüche

1. Reinigungswagen, umfassend einen Grundkörper (1), wobei die laterale Ausdehnung des Grundkörpers (1) durch eine äußere umfängliche Grenzfläche (2) oder Grenzlinie begrenzt ist und wobei der Grundkörper (1) mindestens ein an den Grundkörper (1) ankoppelbares Modul (3, 6) trägt, wobei das Modul (3, 6) dem Grundkörper (1) derart formschlüssig, reibschlüssig und/oder kraftschlüssig kippstabil zugeordnet ist, dass der Bodenbereich des Moduls (3, 6) zumindest auf einer Seite über die Grenzfläche (2) oder Grenzlinie des Grundkörpers (1) hinausragt, wobei im Grundkörper (1) mindestens eine Ausnehmung (4) ausgebildet ist, in welche das Modul (3) eingesetzt ist, wobei das Modul (3) mit einem Teil (3a) seines Körpers in die Ausnehmung (4) eingreift, wobei ein anderer Teil (3b) über die Grenzfläche (2) oder Grenzlinie hinausragt, wobei der Grundkörper (1) mindestens eine Sattelstrebe (5) aufweist, auf welche das Modul (3) aufgesetzt ist, wobei das Modul (3) die Sattelstrebe (5) mit zwei Schenkelelementen (3a, 3b) U-förmig umgreift, **dadurch gekennzeichnet, dass** der Grundkörper (1) als gerüstartiges Element mit vier Hauptstegen (7, 8, 9, 10) und mindestens einer Sattelstrebe (5) ausgebildet ist, wobei sich die Sattelstrebe (5) unter Ausbildung mindestens einer Ausnehmung (4) zwischen zwei Hauptstegen (7, 9) erstreckt.

2. Reinigungswagen nach Anspruch 1, **dadurch gekennzeichnet, dass** der Grundkörper (1) mindestens einem Modul (3, 6) in vertikaler Richtung eine Abstützung bietet, wobei die Kippstabilität des Moduls (3, 6) durch einen vertikalen Formschluss zwischen Grundkörper (1) und Modul (3, 6) gegeben ist.

3. Reinigungswagen nach einem der voranstehenden Ansprüche, **dadurch gekennzeichnet, dass** im Grundkörper (1) mindestens zwei Module (3, 6) aufgenommen sind, wobei sich ein erstes Modul (3) gegen ein zweites Modul (6) gegen Verkippen abstützt.

4. Reinigungswagen nach einem der voranstehenden Ansprüche, **dadurch gekennzeichnet, dass** im Grundkörper (1) mindestens zwei Module (3, 6) aufgenommen sind, wobei die Module (3, 6) derart komplementär zueinander ausgebildet sind, dass sie unter Ausbildung eines Formschlusses aneinander anliegen.

5. Reinigungswagen nach einem der voranstehenden Ansprüche, **dadurch gekennzeichnet, dass** mindestens ein Modul (3, 6) als Transportbehälter ausgestaltet ist.

6. Reinigungswagen nach Anspruch 5, **dadurch gekennzeichnet, dass** mindestens ein Modul (3, 6) als Transportbehälter mit nach oben gerichteter Öffnung ausgestaltet ist.

7. Reinigungswagen nach Anspruch 5 oder 6, **dadurch gekennzeichnet, dass** der Transportbehälter konisch ausgebildet ist, sich nämlich zu seiner Öffnung hin im Umfang aufweitet.

8. Reinigungswagen nach Anspruch 1, **dadurch gekennzeichnet, dass** die Sattelstrebe (5) als Griff ausgebildet ist und sich dadurch von den Hauptstegen (7, 8, 9, 10) unterscheidet.

## Claims

1. Cleaning cart, including a basic body (1), wherein the lateral extent of the basic body (1) is defined by an outside peripheral boundary surface (2) or boundary line and wherein the basic body (1) carries at least one module (3, 6) which is couplable to the basic body (1), wherein the module (3, 6) is assigned to the basic body (1) in such a positive-locking, frictional and/or friction-locking manner so as to be tip-resistant that the bottom region of the module (3, 6) projects beyond the boundary surface (2) or the boundary line of the basic body (1) at least on one side, wherein at least one recess (4) in which a module (3) is inserted is realized in the basic body (1), wherein the module (3) engages in the recess (4) by way of part (3a) of its body, wherein another part (3b) projects beyond the boundary surface (2) or boundary line, wherein the basic body (1) comprises at least one saddle strut (5) onto which the module (3) is fitted, wherein the module (3) encompasses the saddle strut (5) in a U-shaped manner with two leg elements (3a, 3b), **characterized in that** the basic body (1) is realized as a scaffold-like element with four main webs (7, 8, 9, 10) and at least one saddle strut (5), wherein the saddle strut (5) extends between two main webs (7, 9) thus realizing at least one recess (4).

2. Cleaning cart according to Claim 1, **characterized in that** the basic body (1) provides support to at least one module (3, 6) in the vertical direction, wherein the tilt stability of the module (3, 6) is provided by a vertical positive-locking connection between the basic body (1) and the module (3, 6).

3. Cleaning cart according to one of the preceding claims, **characterized in that** at least two modules (3, 6) are received in the basic body (1), wherein a first module (3) is supported against tilting against a second module (6).

4. Cleaning cart according to one of the preceding claims, **characterized in that** at least two modules (3, 6) are received in the basic body (1), wherein the modules (3, 6) are realized in a complementary manner with respect to one another such that they abut against one another thus realizing a positive-locking connection.

5. Cleaning cart according to one of the preceding claims, **characterized in that** at least one module (3, 6) is developed as a transport container.

6. Cleaning cart according to Claim 5, **characterized in that** at least one module (3, 6) is developed as a transport container with an upwardly directed opening.

7. Cleaning cart according to Claim 5 or 6, **characterized in that** the transport container is realized in a conical manner, namely opens out in size toward its opening.

8. Cleaning cart according to Claim 1, **characterized in that** the saddle strut (5) is realized as a handle and as a result differs from the main webs (7, 8, 9, 10).

## Revendications

1. Chariot de nettoyage, comprenant un corps de base (1), dans lequel l'extension latérale du corps de base (1) est limitée par une face de limitation (2) ou une ligne de limitation périphérique extérieure et dans lequel le corps de base (1) porte au moins un module (3, 6), pouvant être couplé au corps de base (1), dans lequel le module (3, 6) est associé au corps de base (1) de façon stable au basculement par emboîtement, par friction et/ou par force, de telle manière que la région de fond du module (3, 6) dépasse au moins sur un côté au-delà de la face de limitation (2) ou de la ligne de limitation du corps de base (1), dans lequel au moins un évidement (4), dans lequel le module (3) est introduit, est formé dans le corps de base (1), dans lequel le module (3) s'engage avec une partie (3a) de son corps dans l'évidement (4), dans lequel une autre partie (3b) dépasse au-delà de la face de limitation (2) ou de la ligne de limitation, dans lequel le corps de base (1) présente au moins une barre de berceau (5), sur laquelle le module (3) est posé, dans lequel le module (3) enfourche la barre de berceau (5) en forme de U avec deux éléments de branche (3a, 3b), **caractérisé en ce que** le corps de base (1) est réalisé par un élément en forme de châssis avec quatre membrures principales (7, 8, 9, 10) et au moins une barre de berceau (5), dans lequel la barre de berceau (5) s'étend entre deux membrures principales (7, 9) en formant au moins un évidement (4).

2. Chariot de nettoyage selon la revendication 1, **caractérisé en ce que** le corps de base (1) offre à au moins un module (3, 6) un appui en direction verticale, dans lequel la stabilité au basculement du module (3, 6) est assurée par un assemblage par emboîtement vertical entre le corps de base (1) et le module (3, 6).

3. Chariot de nettoyage selon l'une quelconque des revendications précédentes, **caractérisé en ce qu'**au moins deux modules (3, 6) sont logés dans le corps de base (1), dans lequel un premier module (3) s'appuie contre un second module (6) contre le basculement.

4. Chariot de nettoyage selon l'une quelconque des revendications précédentes, **caractérisé en ce qu'**au moins deux modules (3, 6) ont logés dans le corps de base (1), dans lequel les modules (3, 6) sont réalisés de façon complémentaire l'un à l'autre, telle manière qu'ils s'appliquent l'un contre l'autre en formant un assemblage par emboîtement.

5. Chariot de nettoyage selon l'une quelconque des revendications précédentes, **caractérisé en ce qu'**au moins un module (3, 6) est configuré comme récipient de transport.

6. Chariot de nettoyage selon la revendication 5, **caractérisé en ce qu'**au moins un module (3, 6) est configuré comme récipient de transport avec une ouverture orientée vers le haut.

7. Chariot de nettoyage selon une des revendications 5 ou 6, **caractérisé en ce que** le récipient de transport est de forme conique, à savoir que son pourtour s'élargit en direction de son ouverture.

8. Chariot de nettoyage selon la revendication 1, **caractérisé en ce que** la barre de berceau (5) est réalisée en forme de poignée et se distingue ainsi des membrures principales (7, 8, 9, 10).
